# EUROPÄISCHE PATENTSCHRIFT

(11) **EP 1 446 863 B1**
(45) Veröffentlichungstag und Bekanntmachung des Hinweises auf die Patenterteilung: **16.12.2009**
(21) Anmeldenummer: 02796503.7
(22) Anmeldetag: 20.11.2002
(51) Int. Cl.: H02M 1/00

(54) **INTEGRIERTER GLEICHSPANNUNGSWANDLER**
INTEGRATED DC/DC CONVERTER
CONVERTISSEUR CONTINU-CONTINU INTEGRE

(30) Priorität: 22.11.2001 DE 10157291
(43) Veröffentlichungstag der Anmeldung: 18.08.2004
(73) Patentinhaber: Infineon Technologies AG, 85579 Neubiberg (DE)
(72) Erfinder: BERNARDON, Derek, A-9500 Villach (AT)
(74) Vertreter: Lange, Thomas
(86) Internationale Anmeldenummer: PCT/DE2002/004271
(87) Internationale Veröffentlichungsnummer: WO 2003/047078

(56) Entgegenhaltungen:
- US-A- 4 685 040
- US-B1- 6 307 359
- D. SWEETMAN: "Bootstrapping isolated converters." ELECTRONIC ENGINEERING, November 1998 (1998-11), Seiten 26-28, XP875188
- PATENT ABSTRACTS OF JAPAN Bd. 017, Nr. 629, 19. November 1993 (1993-11-19) & JP 05 199044 A (NEC IC MICROCOMPUTER SYSTEMS), 6. August 1993 (1993-08-06)

## Beschreibung

Die Erfindung betrifft einen Gleichspannungswandler, welcher in einen integrierten Schaltkreis integriert ist und eine Speisespannung für den integrierten Schaltkreis bereitstellt.

Jedes elektronische Gerät benötigt eine Stromversorgungsquelle, die im Allgemeinen eine Gleichspannung liefern muss. Die Gleichspannung kann in Netzteilen durch Transformation und Gleichrichten einer Netzspannung oder z.B. von einer Batterie erzeugt werden. Im ersten Fall weist die so gewonnene Gleichspannung häufig eine beträchtliche Welligkeit auf und ändert sich zudem bei Schwankungen der Netzspannung, des Laststroms und der Temperatur. Daher wird in der Regel die Ausgangsspannung der Gleichrichterschaltung nicht direkt als Versorgungsspannung für elektronische Schaltkreise verwendet, sondern zuvor noch einem Gleichspannungswandler zugeführt, welcher die Schwankungen aus dem Gleichspannungssignal eliminiert.

Bei der Verwendung einer Batterie als Stromversorgungsquelle kann ebenfalls eine Spannungsstabilisierung erreicht werden. Neben der Bereitstellung einer stabilisierten Spannung ermöglicht ein Gleichspannungswandler, eine Eingangsspannung in eine Ausgangsspannung derart umzuwandeln, dass die Ausgangsspannung einen bestimmten gewünschten Spannungswert aufweist und damit als Speisespannung für zugehörige elektronische Bauelemente verwendet werden kann.

Ein Gleichspannungswandler weist einen getakteten Schalter auf, durch welchen eine Speicherdrossel zyklisch geladen und entladen wird. Die Ausgangsspannung, die am Ausgang der Speicherdrossel abgreifbar ist, lässt sich aus dem Verhältnis der Zeitintervalle bestimmen, in welchen der Schalter geöffnet bzw. geschlossen ist.

Gleichspannungswandler sind beispielsweise aus dem Abschnitt 16.6.2 "Erzeugung des Schaltsignals" des Buchs "Halbleiter-Schaltungstechnik" von Ulrich Tietze und Christoph Schenk, erschienen im Springer-Verlag, Berlin, 1999, 11. Auflage, Seiten 983-985, bekannt.

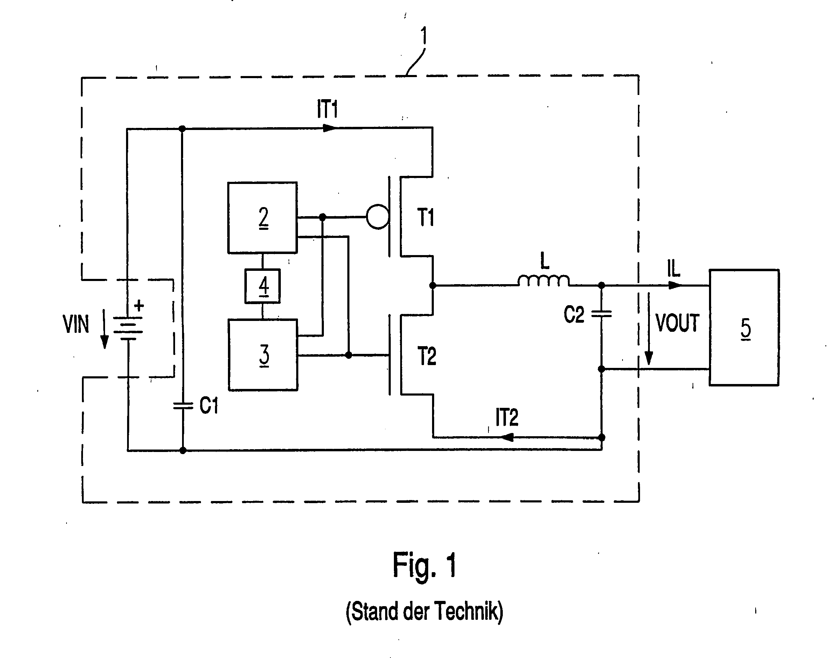

In Fig. 1 ist das Schaltbild eines bekannten Gleichspannungswandlers schematisch dargestellt.

Zur Gleichspannungswandlung einer Eingangsspannung VIN in eine Ausgangsspannung VOUT umfasst der in Fig. 1 dargestellte Gleichspannungswandler 1 MOS-Transistoren T1 und T2, Kondensatoren C1 und C2, eine Speicherdrossel in Form einer Spule L, eine PWM-Steuereinheit 2, eine PFM-Steuereinheit 3 und eine Betriebsmodus-Steuereinheit 4. Der MOS-Transistor T1, welcher ein p-Kanal-MOSFET ist, ist an seinem Source-Anschluss mit der Eingangsspannung VIN beaufschlagt. Durch die Drain-Source-Strecke des MOS-Transistors T1 fließt ein Strom IT1. Der Drain-Anschluss des MOS-Transistors T1 ist mit dem Eingang der Spule L verbunden. Zwischen dem Ausgang der Spule L und dem negativen Pol der Eingangsspannung VIN ist der Kondensator C2 angeordnet. Am Ausgang der Spule L ist die Ausgangsspannung VOUT gegen den negativen Pol der Eingangsspannung VIN abgreifbar. Der MOS-Transistor T2 ist mit seiner Drain-Source-Strecke zwischen den Drain-Anschluss des MOS-Transistors T1 und den negativen Pol der Eingangsspannung VIN geschaltet. Der MOS-Transistor T2 ist ein n-Kanal-MOSFET. Durch seine Drain-Source-Strecke fließt ein Strom IT2. Die Gate-Potentiale der MOS-Transistoren T1 und T2 werden von den PWM- und PFM-Steuereinheiten 2 und 3 gesteuert. Die PWM- und PFM-Steuereinheiten 2 und 3 sind mit der Betriebsmodus-Steuereinheit 4 verbunden. Der Kondensator C1 ist zwischen die beiden Pole der Eingangsspannung VIN geschaltet. Eine dem Gleichspannungswandler 1 nachgeschaltete Last 5 ist mit der Ausgangsspannung VOUT beaufschlagt. Der Gleichspannungswandler 1 speist die Last 5 mit einem Strom IL.

In einem ersten Schaltzustand der MOS-Transistoren T1 und T2 ist die Drain-Source-Strecke des MOS-Transistors T1 durchgeschaltet und die Drain-Source-Strecke des MOS-Transistors T2 gesperrt. Der erste Schaltzustand wird durch geeignete Gate-Potentiale der beiden MOS-Transistoren T1 und T2 erzeugt. In diesem Schaltzustand fließt durch den MOS-Transistor T1 der von der Eingangsspannung VIN erzeugte Strom IT1 in die Spule L und generiert dort ein Magnetfeld. Sobald die Schaltzustände der MOS-Transistoren T1 und T2 umgekehrt werden und dadurch ein zweiter Schaltzustand erzeugt wird, bricht das Magnetfeld in der Spule L zusammen und der Strom IT2 fließt durch die Drain-Source-Strecke des MOS-Transistors T2. Bei beiden der genannten Schaltzustände fließt der Strom IL durch die Spule L in die Last 5. Zwischen die Spule L und die Last 5 ist ein Tiefpassfilter in Form des Kondensators C2 geschaltet. Der Kondensator C2 bewirkt eine Glättung des Stroms IL.

Der Gleichspannungswandler 1 kann in zwei verschiedenen Betriebsmodi betrieben werden. In einem PWM (pulse width modulation)-Betriebsmodus schaltet die PWM-Steuereinheit 2 die MOS-Transistoren T1 und T2 durch geeignete Beaufschlagung ihrer Gate-Anschlüsse zyklisch zwischen dem ersten und dem zweiten Schaltzustand hin und her, wobei die Zeitlängen des ersten und des zweiten Schaltzustands vorgegeben sein können oder durch einen Regelkreis gesteuert werden. Die PFM-Steuereinheit 3 ist während des PWM-Betriebsmodus deaktiviert. Die Ausgangsspannung VOUT ist in dem PWM-Betriebsmodus eine Funktion der Eingangsspannung VIN und der Zeitlängen, in denen sich der Gleichspannungswandler 1 jeweils in dem ersten bzw. in dem zweiten Schaltzustand befindet. Jeder Umschaltvorgang zwischen den beiden Schaltzuständen bewirkt eine Energiedissipation, welche durch das Aufbringen bzw. das Abführen von Ladungsmengen auf bzw. von den Gate-Elektroden der MOS-Transistoren T1 und T2 verursacht wird. Dieser Energiedissipationseffekt ist umso größer, je höher die Umschaltfrequenz ist. Zur Minimierung des Energieverbrauchs kann der Gleichspannungswandler 1 bei einem niedrigen Laststrom in einem PFM (pulse frequency modulation)-Betriebsmodus betrieben werden. Der PFM-Betriebsmodus wird beispielsweise aktiviert, falls der Strom IL unter einen vorgegebenen Schwellwert sinkt. Ein niedriger Strom IL zeigt an, dass die Last 5 ihrerseits einen geringeren Energiebedarf aufweist und sich beispielsweise in einem Bereitschaftsbetrieb befindet. Während des PFM-Betriebsmodus ist die PWM-Steuereinheit 2 deaktiviert, und die PFM-Steuereinheit 3 steuert die Gate-Potentiale der MOS-Transistoren T1 und T2. In dem PFM-Betriebsmodus ist die Drain-Source-Strecke des MOS-Transistors T2 gesperrt. Die Drain-Source-Strecke des MOS-Transistors T1 wird solange in einem leitenden Zustand gehalten, bis der Strom IL einen oberen Grenzwert erreicht hat. Bei Erreichen des oberen Grenzwerts wird der MOS-Transistor T1 gesperrt, sodass das Magnetfeld in der Spule L zusammenbricht. Sobald der Strom IL auf einen unteren Grenzwert gesunken ist, wird der MOS-Transistor T1 wieder geöffnet. In dem PFM-Betriebsmodus sind folglich die Zeitlängen der Schaltzustände des MOS-Transistors T1 nicht vorgegeben, sondern sie sind durch die Größe des Stroms IL bestimmt und hängen somit von dem Energiebedarf der Last 5 ab. Dadurch wird die Umschaltfrequenz bei nur kleinen Lastströmen im Vergleich zum PWM-Betriebsmodus erheblich reduziert, wodurch sich letztlich eine verringerte Energiedissipation und ein verringerter Energieverbrauch des Gleichspannungswandlers 1 ergeben.

Der Betriebsmodus des Gleichspannungswandlers 1 wird von der Betriebsmodus-Steuereinheit 4 eingestellt. Dazu aktiviert die Betriebsmodus-Steuereinheit 4 während des PWM-Betriebsmodus die PWM-Steuereinheit 2 und deaktiviert die PFM-Steuereinheit 3. Umgekehrt ist während des PFM-Betriebsmodus die PFM-Steuereinheit 3 aktiviert, und die PWM-Steuereinheit 2 ist deaktiviert.

Die in Fig. 1 gezeigte Last 5, welche von dem Gleichspannungswandler 1 mit der Ausgangsspannung VOUT gespeist wird, kann beispielsweise ein integrierter Schaltkreis sein. Aus Gründen der Platzersparnis und im Hinblick auf eine kostengünstige Herstellung wäre es vorteilhaft, den Gleichspannungswandler 1 zusammen mit der Last 5 monolithisch auf einem Substrat zu integrieren. Allerdings müssten trotz der Implementierung des Gleichspannungswandlers 1 in dem integrierten Schaltkreis immer noch Platz und Herstellungskosten für Stromversorgungsquellen aufgebracht werden, die den Gleichspannungswandler und insbesondere seine Steuereinheiten mit Versorgungsspannungen beaufschlagen.

Aus der US-Patentschrift US 4,685,040 A ist ein Gleichspannungswandler zur Erzeugung einer Speisespannung aus einer Eingangsspannung bekannt. Der Gleichspannungswandler ist in einem PWM-Betriebsmodus und einem PFM-Betriebsmodus betreibbar und weist Steuereinheiten für den Betrieb in den entsprechenden Betriebsmodi auf.

Aufgabe der Erfindung ist es, einen Gleichspannungswandler zu schaffen, der in einen integrierten Schaltkreis integriert ist und zu dessen Betrieb möglichst wenige externe Stromversorgungsquellen benötigt werden. Insbesondere soll ein Verfahren angegeben werden, nach welchem sich der integrierte Schaltkreis zusammen mit dem integrierten Gleichspannungswandler aus dem ausgeschalteten Zustand hochfahren lässt.

Die der Erfindung zugrunde liegende Aufgabenstellung wird durch die Merkmale der unabhängigen Patentansprüche 1 und 5 gelöst. Vorteilhafte Weiterbildungen und Ausgestaltungen der Erfindung sind in den Unteransprüchen angegeben.

Ein erfindungsgemäßer Gleichspannungswandler ist in einen integrierten Schaltkreis integriert. Der Gleichspannungswandler generiert aus einer Eingangsspannung eine Speisespannung, mit welcher der integrierte Schaltkreis gespeist wird. Der erfindungsgemäße Gleichspannungswandler wird in einem PWM- und einem PFM-Betriebsmodus betrieben. Der Gleichspannungswandler umfasst eine PWM-Steuereinheit, die den Gleichspannungswandler während des PWM-Betriebsmodus steuert und deren Versorgungsspannung zumindest zeitweise von dem Gleichspannungswandler selbst in Form der Speisespannung bereitgestellt wird. Ferner weist der Gleichspannungswandler eine PFM-Steuereinheit auf, die den Gleichspannungswandler während des PFM-Betriebsmodus steuert. Die PFM-Steuereinheit wird von einer externen Stromversorgungsquelle gespeist. Die externe Stromversorgungsquelle ist gleichzeitig diejenige Stromversorgungsquelle, welche die Eingangsspannung des Gleichspannungswandlers bereitstellt.

Dadurch dass der erfindungsgemäße Gleichspannungswandler die Versorgungsspannung für die PWM-Steuereinheit selbst erzeugt, ist sein Betrieb weitgehend unabhängig von weiteren externen Stromversorgungsquellen. Folglich kann der integrierte Schaltkreis zusammen mit dem in ihm integrierten Gleichspannungswandler im optimalen Fall mit der Eingangsspannung als einziger Stromversorgungsquelle auskommen. Somit werden weitere externe Stromversorgungsquellen, die andernfalls zur Versorgung des Gleichspannungswandlers benötigt würden, eingespart.

Dies bedeutet, dass zur gemeinsamen Versorgung des integrierten Schaltkreises und des Gleichspannungswandlers nur eine Stromversorgungsquelle, beispielsweise eine Batterie, zur Verfügung stehen muss. Diese Stromversorgungsquelle stellt die Eingangsspannung des Gleichspannungswandlers bereit und versorgt die PFM-Steuereinheit. Die Versorgungsspannung für die PWM-Steuereinheit wird dahingegen von dem Gleichspannungswandler selber aufgebracht.

Bevor der erfindungsgemäße Gleichspannungswandler aus dem ausgeschalteten Zustand hochgefahren wird, ist es sinnvoll, die Spannungseingänge des Gleichspannungswandlers auf eine anliegende Eingangsspannung und insbesondere auf deren richtige Polung hin zu überprüfen. Erst dann sollte der Gleichspannungswandler, beispielsweise im PFM-Betriebsmodus, gestartet werden. Diese Aufgabe übernimmt vorteilhafterweise eine Kontroll/Start-Einheit.

Die PWM-Steuereinheit enthält eine digitale Schaltung. Dadurch kann die Funktionsweise der PWM-Steuereinheit auch nach der Herstellung der PWM-Steuereinheit noch modifiziert werden.

Der integrierte Schaltkreis lässt sich beispielsweise zusammen mit dem erfindungsgemäßen Gleichspannungswandler mittels CMOS (complementary metal oxid semiconductor)-Technologie herstellen.

Ein Verfahren dient zum Betreiben eines Gleichspannungswandlers, welcher in einen integrierten Schaltkreis integriert ist und welcher für diesen eine Speisespannung bereitstellt. Der Gleichspannungswandler ist in einem PWM-und einem PFM-Betriebsmodus betreibbar. Dabei wird eine PWM-Steuereinheit des Gleichspannungswandlers zumindest zeitweise von der Speisespannung versorgt. Die PWM-Steuereinheit steuert den Gleichspannungswandler während des PWM-Betriebsmodus. Eine PFM-Steuereinheit, die den Gleichspannungswandler während des PFM-Betriebsmodus steuert, wird von einer externen Stromversorgungsquelle gespeist. Die externe Stromversorgungsquelle ist gleichzeitig diejenige Stromversorgungsquelle, welche die Eingangsspannung des Gleichspannungswandlers bereitstellt.

Der Vorteil dieses Betriebsverfahrens ist, dass mindestens ein Teil des Gleichspannungswandlers zumindest zeitweise von dem Gleichspannungswandler selbst versorgt wird. Dieses ermöglicht eine weitgehende Unabhängigkeit des Gleichspannungswandlers von externen Stromversorgungsquellen.

Ein erfindungsgemäßes Verfahren gibt Schritte an, um einen integrierten Schaltkreis mit einem in den Schaltkreis integrierten Gleichspannungswandler aus dem ausgeschalteten Zustand hochzufahren. Der Gleichspannungswandler wird von einer externen Stromversorgungsquelle gespeist, ist in einem PFM- und PWM-Betriebsmodus betreibbar und erzeugt eine Speisespannung für den integrierten Schaltkreis. Der Gleichspannungswandler wird zunächst im PFM-Betriebsmodus gestartet. Mit der im PFM-Betriebsmodus erzeugten Speisespannung wird eine Steuereinheit versorgt, die den Gleichspannungswandler im PWM-Betriebsmodus steuert. Anschließend wird der Gleichspannungswandler in den PWM-Betriebsmodus umgeschaltet. Nach Abschluss dieser Startphase des Gleichspannungswandlers werden weitere Bauelemente des integrierten Schaltkreises mit der Speisespannung beaufschlagt.

Das erfindungsgemäße Verfahren hat ebenfalls zum Vorteil, dass die Anzahl der externen Stromversorgungsquellen minimiert wird. Zu Beginn des Hochfahrens wird zum Betrieb und zur Steuerung des Gleichspannungswandlers ausschließlich die von der externen Stromversorgungsquelle bereitgestellte Eingangsspannung verwendet. An die externe Stromversorgungsquelle ist der Gleichspannungswandler ohnehin angeschlossen, da er aus der Eingangsspannung die Speisespannung erzeugt. Sobald der Gleichspannungswandler in den PWM-Betriebsmodus umgeschaltet wird, wird die Steuereinheit für den PWM-Betriebsmodus von der Speisespannung versorgt. Das bedeutet, dass der Gleichspannungswandler während des PWM-Betriebsmodus seine Versorgungsspannung selbstständig generiert und somit keine extern erzeugte Versorgungsspannung benötigt. Ferner hat der PWM-Betriebsmodus gegenüber dem PFM-Betriebsmodus den Vorteil, dass mittels des PWM-Betriebsmodus ein größerer Speisestrom zur Verfügung gestellt werden kann. Daher werden die weiteren Bauelemente des integrierten Schaltkreises erst mit dem Gleichspannungswandler verbunden, sobald dieser den PWM-Betriebsmodus aktiviert hat.

Gemäß einer besonders vorteilhaften Ausgestaltung des erfindungsgemäßen Verfahrens zum Hochfahren des integrierten Schaltkreises wird vor dem Starten des Gleichspannungswandlers im PFM-Betriebsmodus die Eingangsspannung des Gleichspannungswandlers von einer Kontroll/Start-Einheit kontrolliert. Insbesondere könnte dadurch eine möglicherweise fehlerhafte Polung der Eingangsspannung festgestellt werden. Erst danach wird der PFM-Betriebsmodus von der Kontroll/Start-Einheit gestartet.

Es ist vorgesehen, dass der Gleichspannungswandler von dem PFM-Betriebsmodus in den PWM-Betriebsmodus wechselt, sobald die Speisespannung und/oder ein Speisestrom, welcher beispielsweise an dem für die Speisespannung vorgesehenen Ausgang auskoppelbar ist, vorgegebene Werte überschreiten. Durch eine genügende hohe Speisespannung oder einen genügend hohen Speisestrom wird angezeigt, dass der Gleichspannungswandler eine Last hinreichend versorgen kann. Im Verfahrensschritt (b) ist diese Last durch die Steuereinheit für den PWM-Betriebsmodus gegeben.

Eine weitere besonders vorteilhafte Ausgestaltung der Erfindung sieht vor, dass der Gleichspannungswandler während des PFM-Betriebsmodus von einer weiteren Steuereinheit gesteuert wird. Die weitere Steuereinheit bezieht ihre Versorgungsspannung von der externen Stromversorgungsquelle.

Die Erfindung wird nachfolgend unter Bezugnahme auf die Zeichnungen näher erläutert. In diesen zeigen:
- Fig. 1: ein schematisches Schaltbild eines bekannten Gleichspannungswandlers;
- Fig. 2: ein schematisches Schaltbild eines Ausführungsbeispiels des erfindungsgemäßen Gleichspannungswandlers; und
- Fig. 3: ein Ablaufdiagramm zur Veranschaulichung eines Ausführungsbeispiels des erfindungsgemäßen
Verfahrens zum Hochfahren eines integrierten Schaltkreises mit einem Gleichspannungswandler.

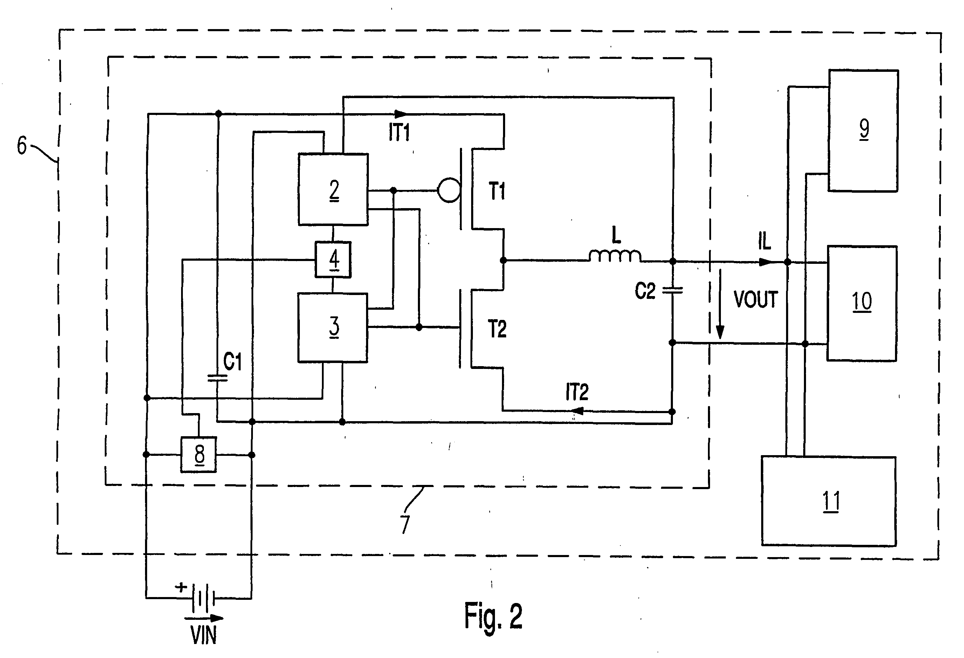

In Fig. 2 ist das Schaltbild eines integrierten Schaltkreises 6 mit einem erfindungsgemäßen Gleichspannungswandler 7 schematisch dargestellt.

Der Gleichspannungswandler 7 entspricht in vielen Schaltungsteilen dem in Fig. 1 gezeigten Gleichspannungswandler 1. Dieselben öder vergleichbare Funktionselemente sind daher mit denselben Bezugszeichen versehen.

Wesentliche Unterschiede zwischen den Gleichspannungswandlern 1 und 7 sind zum einen die Implementierung des Gleichspannungswandlers 7 in den integrierten Schaltkreis 6 sowie zum anderen die unterschiedlichen Strömversorgungsquellen der PWM-Steuereinheit 2 und der PFM-Steuereinheit 3.

Bei dem Gleichspannungswandler 7 sind die Versorgungsspannungsanschlüsse der PWM-Steuereinheit 2 mit dem Ausgang der Spule L bzw. mit dem negativen Pol der Eingangsspannung VIN verbunden, d.h., dass die Versorgungsspannung der PWM-Steuereinheit 2 von der Ausgangsspannung VOUT des Gleichspannungswandlers 7 aufgebracht wird. An den Versorgungsspannungsanschlüssen der PFM-Steuereinheit 3 liegt die Eingangsspannung VIN an. Die Eingangsspannung VIN kann beispielsweise von einer Batterie bereitgestellt werden.

Ferner enthält der Gleichspannungswandler 7 eine Kontroll/Start-Einheit 8. Zwei Messanschlüsse der Kontroll/Start-Einheit 8 sind mit der Eingangsspannung VIN beaufschlagt. Ein Steueranschluss der Kontroll/Start-Einheit 8 ist mit einem Steueranschluss der Betriebsmodus-Steuereinheit 4 verbunden.

Ausgangsseitig speist die Ausgangsspannung VOUT des Gleichspannungswandlers 7 Bauelemente 9, 10 und 11 des integrierten Schaltkreises 6. Sie repräsentieren die eigentlichen Funktionselemente des integrierten Schaltkreises 6 und können z.B. in Form komplexer Module (Speicher, Prozessoren usw.) realisiert sein.

Es kann vorkommen, dass die Ausgangsspannung VOUT bzw. die Eingangsspannung VIN nicht den Spannungswert bereitstellt, der für den Betrieb der PWM-Steuereinheit 2 bzw. der PFM-Steuereinheit 3 benötigt wird. In derartigen Fällen kann vorgesehen sein, dass als Versorgungsspannung der PWM-Steuereinheit 2 bzw. der PFM-Steuereinheit 3 nicht direkt die Ausgangsspannung VOUT bzw. die Eingangsspannung VIN verwendet wird, sondern dass die Spannungen VOUT und VIN zunächst auf entsprechende Werte umgeformt werden und anschließend den Steuereinheiten 2 und 3 zugeführt werden. Diese Spannungsumformungen können beispielsweise auch in den Steuereinheiten 2 und 3 selbst vollzogen werden.

Des Weiteren ist es möglich, Schalter vorzusehen, durch welche die Versorgungsspannungsanschlüsse der PWM-Steuereinheit 2 mit der Ausgangsspannung VOUT verbunden oder von ihr getrennt werden können. Diese Schalter sind während des PWM-Betriebsmodus geschlossen. Beispielsweise können die Schalter von der Betriebsmodus-Steuereinheit 4 gesteuert werden.

Weitere Schalter können zwischen dem Ausgang des Gleichspannungswandlers 7 und den Bauelementen 9, 10 und 11 vorgesehen sein. Vorzugsweise werden diese Schalter erst dann geschlossen, wenn der Gleichspannungswandler 7 im PWM-Betriebsmodus arbeitet und einen genügend großen Strom IL generieren kann.

Des Weiteren kann der Gleichspannungswandler 7 auch Bauelemente aufweisen, mit welchen die Ausgangsspannung VOUT geregelt werden kann. Insbesondere können zu diesem Zweck Messeinheiten vorgesehen sein, die beispielsweise den Strom IL oder die Ausgangsspannung VOUT messen. Ferner können die von diesen Messeinheiten ermittelten Werte der Betriebsmodus-Steuereinheit 4 zur Einstellung des Betriebsmodus dienen.

Der in Fig. 2 gezeigte Gleichspannungswandler 7 ist ein Abwärtswandler, d.h. seine Ausgangsspannung VOUT ist kleiner als die Eingangsspannung VIN. Die Erfindung ist allerdings nicht auf Abwärtswandler beschränkt. Die Erfindung kann beispielsweise auch auf Aufwärtswandler, deren Ausgangsspannung größer als ihre Eingangsspannung ist, oder invertierende Gleichspannungswandler, deren Ausgangsspannung negativ ist, angewandt werden.

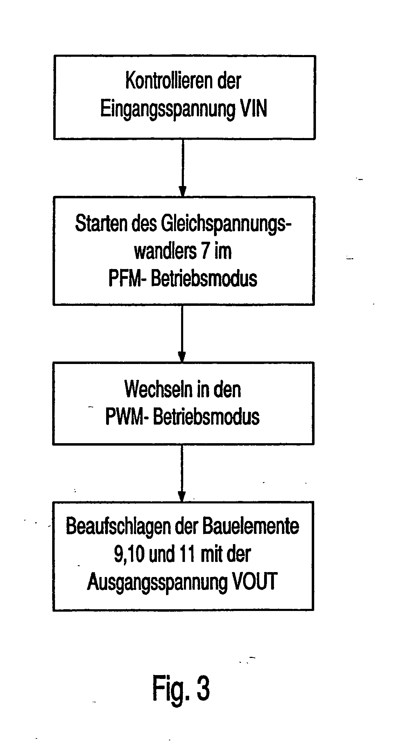

In Fig. 3 ist ein Ablaufdiagramm dargestellt, mit welchem ein Verfahren zum Hochfahren des in Fig. 2 gezeigten integrierten Schaltkreises 6 aus dem ausgeschalteten Zustand nachfolgend erläutert wird.

Vor dem Starten des Gleichspannungswandlers 7 wird von der Kontroll/Start-Einheit 8 die an dem Gleichspannungswandler 7 anliegende Eingangsspannung VIN kontrolliert. Insbesondere wird dabei festgestellt, ob die Eingangsspannung VIN eine richtige Polung aufweist. Da sich die Erfindung besonders dazu eignet, den integrierten Schaltkreis 6 ausschließlich über eine Batterie zu versorgen, ist dieser Kontrollschritt notwendig, um Beschädigungen des integrierten Schaltkreises 6 durch eine falsche Polung der Batterie zu vermeiden.

Sofern der Gleichspannungswandler 7 digitale Bauelemente aufweist, werden deren Register ebenfalls vor dem Starten des Gleichspannungswandlers 7 von der Kontroll/Start-Einheit 8 auf vorgegebene Werte zurückgesetzt. Anschließend wird der Gleichspannungswandler 7 von der Kontroll/Start-Einheit 8 im PFM-Betriebsmodus gestartet. Dazu führt die Kontroll/Start-Einheit 8 ein entsprechendes Signal der Betriebsmodus-Steuereinheit 4 zu. Da die PFM-Steuereinheit 3 von der Eingangsspannung VIN versorgt wird, ist die PFM-Steuereinheit 3 von Beginn an einsatzfähig und kann die Steuerung des Gleichspannungswandlers 7 während dieser Startphase übernehmen.

Der anfängliche Betrieb des Gleichspannungswandlers 7 im PFM-Betriebsmodus dauert solange an, bis die Ausgangsspannung VOUT einen vorgegebenen konstanten Wert erreicht hat. Danach wechselt die Betriebsmodus-Steuereinheit 4 den Betriebsmodus in den PWM-Betriebsmodus. Der PWM-Betriebsmodus wird von der PWM-Steuereinheit 2 gesteuert. Die PWM-Steuereinheit 2 wird von der Ausgangsspannung VOUT versorgt und kann daher nicht vor Erreichen des vorgegebenen Werts der Ausgangsspannung VOUT in Betrieb genommen werden.

Durch den PWM-Betriebsmodus kann im Vergleich zu dem PFM-Betriebsmodus ein größerer Strom IL generiert werden. Dieses ermöglicht es, nun die Bauelemente 9, 10 und 11 mit der Ausgangsspannung VOUT zu beaufschlagen, wodurch die Bauelemente 9, 10 und 11 gestartet werden. Damit ist der integrierte Schaltkreis 6 voll funktionsfähig.

## Patentansprüche

1. Gleichspannungswandler (7) zur Erzeugung einer Speisespannung (VOUT) für einen integrierten Schaltkreis (6) aus einer Eingangsspannung (VIN), wobei der Gleichspannungswandler (7)
- in einem PWM-Betriebsmodus und einem PFM-Betriebsmodus betreibbar ist,
- eine PWM-Steuereinheit (2) zur Steuerung des Gleichspannungswandlers (7) im PWM-Betriebsmodus aufweist, und
- eine PFM-Steuereinheit (3) zur Steuerung des Gleichspannungswandlers (7) im PFM-Betriebsmodus aufweist,
**dadurch gekennzeichnet,**
- **dass** der Gleichspannungswandler (7) in den integrierten Schaltkreis (6) integriert ist,
- **dass** als Versorgungsspannung der PWM-Steuereinheit (2) zumindest zeitweise die Speisespannung (VOUT) dient, und
- **dass** die PFM-Steuereinheit (3) zur Stromversorgung an eine externe Stromversorgungsquelle angeschlossen ist, wobei die externe Stromversorgungsquelle auch die Eingangsspannung (VIN) des Gleichspannungswandlers (7) bereitstellt.

2. Gleichspannungswandler (7) nach Anspruch 1, **gekennzeichnet durch**
- eine Kontroll/Start-Einheit (8) zur Kontrolle der Eingangsspannung (VIN), insbesondere zur Kontrolle der Polung der Eingangsspannung (VIN), und zum Starten des Gleichspannungswandlers (7) im PFM-Betriebsmodus.

3. Gleichspannungswandler (7) nach Anspruch 1 oder 2,
**dadurch gekennzeichnet,**
**dass** die PWM-Steuereinheit (2) eine digitale Schaltung umfasst.

4. Gleichspannungswandler (7) nach einem oder mehreren der vorhergehenden Ansprüche,
**dadurch gekennzeichnet,**
- **dass** der integrierte Schaltkreis (6) in CMOS-Technologie realisiert ist.

5. Verfahren zum Hochfahren eines integrierten Schaltkreises (6) mit einem in den Schaltkreis (6) integrierten Gleichspannungswandler (7), der von einer externen Stromversorgungsquelle gespeist wird, in einem PWM- und einem PFM-Betriebsmodus betreibbar ist und eine Speisespannung (VOUT) für den integrierten Schaltkreis (6) erzeugt, mit den Schritten:
(a) Starten des Gleichspannungswandlers (7) im PFM-Betriebsmodus;
(b) Versorgen einer Steuereinheit (2) für den PWM-Betriebsmodus mit der im PFM-Betriebsmodus erzeugten Speisespannung und Wechseln in den PWM-Betriebsmodus; und
(c) Beaufschlagen weiterer Bauelemente (9, 10, 11) des integrierten Schaltkreises (6) mit der Speisespannung (VOUT).

6. Verfahren nach Anspruch 5,
**dadurch gekennzeichnet,**
- **dass** vor dem Schritt (a) eine Kontroll/Start-Einheit (8) eine Eingangsspannung (VIN) des Gleichspannungswandlers (7), die von der externen Stromversorgungsquelle bereitgestellt wird, kontrolliert und anschließend den Gleichspannungswandler (7) im PFM-Betriebsmodus startet.

7. Verfahren nach Anspruch 5 oder 6,
**dadurch gekennzeichnet,**
- **dass** der Gleichspannungswandler (7) beim Überschreiten einer vorgegebenen Speisespannung (VOUT) und/oder eines vorgegebenen Speisestroms von dem PFM- in den PWM-Betriebsmodus umschaltet.

8. Verfahren nach einem oder mehreren der Ansprüche 5 bis 7,
**dadurch gekennzeichnet,**
- **dass** während des PFM-Betriebsmodus der Gleichspannungswandler (7) von einer weiteren Steuereinheit (3) gesteuert wird, welche von der externen Stromversorgungsquelle versorgt wird.

## Claims

1. DC voltage converter (7) for generating a feed voltage (VOUT) for an integrated circuit (6) from an input voltage (VIN), wherein the DC voltage converter (7)
- can be operated in a PWM operating mode and a PFM operating mode,
- has a PWM control unit (2) for controlling the DC voltage converter (7) in the PWM operating mode, and
- has a PFM control unit (3) for controlling the DC voltage converter (7) in the PFM operating mode,
**characterized**
- **in that** the DC voltage converter (7) is integrated into the integrated circuit (6),
- **in that** the feed voltage (VOUT) serves as supply voltage of the PWM control unit (2) at least at certain times,
- **in that** the PFM control unit (3) is connected to an external power supply source for power supply purposes, wherein the external power supply source also provides the input voltage (VIN) of the DC voltage converter (7).

2. DC voltage converter (7) according to Claim 1,
**characterized by**
- a monitoring/starting unit (8) for monitoring the input voltage (VIN), in particular for monitoring the polarity of the input voltage (VIN), and for starting the DC voltage converter (7) in the PFM operating mode.

3. DC voltage converter (7) according to Claim 1 or 2,
**characterized**
**in that** the PWM control unit (2) comprises a digital circuit.

4. DC voltage converter (7) according to one or more of the preceding claims,
**characterized**
- **in that** the integrated circuit (6) is realized using CMOS technology.

5. Method for starting up an integrated circuit (6) with a DC voltage converter (7) integrated into the circuit (6), which DC voltage converter is fed by an external power supply source, can be operated in a PWM and a PFM operating mode and generates a feed voltage (VOUT) for the integrated circuit (6), comprising the following steps:
(a) starting the DC voltage converter (7) in the PFM operating mode;
(b) supplying a control unit (2) for the PWM operating mode with the feed voltage generated in the PFM operating mode, and changing to the PWM operating mode; and
(c) applying the feed voltage (VOUT) to further components (9, 10, 11) of the integrated circuit (6).

6. Method according to Claim 5,
**characterized**
- **in that**, before step (a), a monitoring/starting unit (8) monitors an input voltage (VIN) of the DC voltage converter (7), said voltage being provided by the external power supply source, and subsequently starts the DC voltage converter (7) in the PFM operating mode.

7. Method according to Claim 5 or 6,
**characterized**
- **in that** the DC voltage converter (7) changes over from the PFM to the PWM operating mode in the event of a predefined feed voltage (VOUT) and/or a predefined feed current being exceeded.

8. Method according to one or more of Claims 5 to 7,
**characterized**
- **in that**, during the PFM operating mode, the DC voltage converter (7) is controlled by a further control unit (3), which is supplied by the external power supply source.

## Revendications

1. Convertisseur (7) continu-continu de production d'une tension (VOUT) d'alimentation d'un circuit (6) intégré à partir d'une tension (VIN) d'entrée, dans lequel le convertisseur (7) continu-continu
- peut fonctionner dans un mode de fonctionnement en modulation d'impulsion en durée et dans un mode de fonctionnement en modulation d'impulsion en fréquence,
- a une unité (2) de commande en modulation d'impulsion en durée pour commander le convertisseur (7) continu-continu en mode de fonctionnement en modulation d'impulsion en durée,
- a une unité (7) de commande en modulation d'impulsion en fréquence pour commander le convertisseur (7) continu-continu en mode de fonctionnement en modulation d'impulsion en fréquence,
**caractérisé en ce que**
- le convertisseur (7) continu-continu est intégré au circuit (6) intégré,
- **en ce qu'**au moins de temps à autre la tension (VOUT) d'alimentation sert de tension d'alimentation de l'unité (2) de commande de modulation d'impulsion en durée, et
- **en ce que** l'unité (3) de commande de modulation d'impulsion en fréquence est, pour l'alimentation en courant, raccordée à une source extérieure d'alimentation en courant, la source extérieure d'alimentation en courant procurant aussi la tension (VIN) d'entrée du convertisseur (7) continu-continu.

2. Convertisseur (7) continu-continu suivant la revendication 1,
**caractérisé par**
- une unité (8) de contrôle/mise en route pour le contrôle de la tension (VIN) d'entrée, notamment pour le contrôle de la polarité de la tension (VIN) d'entrée, et pour la mise en route du convertisseur (7) continu-continu dans le mode de fonctionnement en modulation d'impulsion en fréquence.

3. Convertisseur (7) continu-continu suivant les revendications 1 ou 2,
**caractérisé en ce que**
l'unité (2) de commande en modulation d'impulsion en durée comprend un circuit numérique.

4. Convertisseur (7) continu-continu suivant l'une des revendications précédentes,
**caractérisé**
- **en ce que** le circuit (6) intégré est réalisé en technologique CMOS.

5. Procédé pour mettre en route un circuit (6) intégré ayant un convertisseur (7) continu-continu qui est intégré au circuit (6), qui est alimenté par une source extérieure d'alimentation en courant, qui peut fonctionner dans un mode de fonctionnement en modulation d'impulsion en durée et dans un mode de fonctionnement en modulation d'impulsion en fréquence et qui produit une tension (VOUT) d'alimentation du circuit (6) intégré, comprenant les stades dans lesquels :
(a) on met en route le convertisseur (7) continu-continu dans le mode de fonctionnement en modulation d'impulsion en fréquence ;
(b) on alimente une unité (2) de commande pour le mode de fonctionnement en modulation d'impulsion en durée par la tension d'alimentation produite dans le mode de fonctionnement en modulation d'impulsion en fréquence et on passe dans le mode de fonctionnement en modulation d'impulsion en durée ; et
(c) on alimente d'autres composants (9, 10, 11) du circuit (6) intégré par la tension (VOUT) d'alimentation.

6. Procédé suivant la revendication 5,
**caractérisé**
- **en ce qu**'avant le stade (a) une unité (8) de ccontrôle/mise en route contrôle une tension (VIN) d'entrée du convertisseur (7) continu-continu qui est procurée par la source extérieure d'alimentation en courant et ensuite met en route le convertisseur (7) continu-continu dans le mode de fonctionnement en modulation d'impulsion en fréquence.

7. Procédé suivant la revendication 5 ou 6,
**caractérisé**
- **en ce que** le convertisseur (7) continu-continu commute lorsqu'une tension (VOUT) d'alimentation prescrite et/ou un courant d'alimentation prescrit passe du mode de fonctionnement en modulation d'impulsion en fréquence au mode de fonctionnement en modulation d'impulsion en durée.

8. Procédé suivant l'une ou plusieurs des revendications 5 à 7,
**caractérisé**
- **en ce que** pendant le mode de fonctionnement en modulation d'impulsion en fréquence, on commande le convertisseur (7) continu-continu par une autre unité (3) de commande, qui est alimentée par la source extérieure d'alimentation en courant.
